# FASCICULE DE BREVET EUROPEEN

(11) **EP 4 096 088 B1**
(45) Date de publication et mention de la délivrance du brevet: **18.10.2023**
(21) Numéro de dépôt: 22174649.8
(22) Date de dépôt: 20.05.2022
(51) Int. Cl.: H02S 20/10, H02S 20/32, H02S 30/10, A01G 2/00, A01G 9/24, F24S 30/452

(54) **INSTALLATION PHOTOVOLTAIQUE**
FOTOVOLTAIKANLAGE
PHOTOVOLTAIC SYSTEM

(30) Priorité: 25.05.2021 FR 2105423
(43) Date de publication de la demande: 30.11.2022
(73) Titulaire: Electricité de France, 75008 Paris (FR)
(72) Inventeur: VAN ISEGHEM, Mike, 77810 THOMERY (FR); POIVEY, Romain, 75015 PARIS (FR); MALLO, Etienne, 75011 PARIS (FR)
(74) Mandataire: Regimbeau

(56) Documents cités:
- WO-A1-2018/146288
- WO-A1-2020/059963
- DE-A1-102013 002 825
- FR-A1- 2 973 985
- US-A1- 2017 202 155
- US-B1- 9 016 292

## Description

### DOMAINE DE L'INVENTION

L'invention se situe dans le domaine des installations photovoltaïques et plus particulièrement de l'agriphotovoltaïsme.

La présente invention concerne plus particulièrement une installation photovoltaïque comprenant un dispositif de suiveur solaire et au moins un panneau photovoltaïque monté sur ledit dispositif de suiveur solaire, ce suiveur solaire permettant de faire varier l'inclinaison dudit panneau photovoltaïque par rapport à l'horizontale.

### ETAT DE LA TECHNIQUE

L'agriphotovoltaïsme désigne le fait de réaliser une culture étagée, qui associe une production d'électricité photovoltaïque et une production agricole sur une même surface.

La coexistence de panneaux photovoltaïques et de cultures implique un partage de la lumière entre ces deux types de production. Pour ce faire, les panneaux photovoltaïques (ou panneaux solaires) sont montés sur un dispositif de suiveur solaire (connu sous la terminologie anglaise de "tracker"), qui permet de faire varier leurs inclinaisons respectives afin de suivre au mieux la course du soleil.

Le fait de pouvoir orienter ces panneaux photovoltaïques permet également de recréer des conditions favorables au bon développement des plantes en limitant certains effets de la grêle, des fortes pluies, des gels tardifs, ou encore en protégeant ces plantes de l'ensoleillement excessif durant les étés chauds et secs.

Par ailleurs, d'après les chiffres officiels, l'agriculture consomme presque toute l'eau qu'elle prélève dans les plans d'eau ou les rivières. Les impacts de ces prélèvements sont importants, car ils sont concentrés principalement durant les trois mois d'été -, période pendant laquelle l'agriculture peut représenter jusqu'à 80 % de l'eau consommée sur le territoire.

Durant l'été, pour faire face à une insuffisance de la ressource en eau en période d'étiage, les autorités sont mêmes parfois amenés à prendre des mesures exceptionnelles de limitation ou de suspension des usages de l'eau. L'agriculture n'étant pas considérée comme prioritaire pour la captation d'eau, par rapport aux prélèvements pour l'eau potable par exemple, l'eau de pluie devient une ressource de plus en plus précieuse. La récupération de l'eau de pluie est donc primordiale.

Le problème principal concernant la gestion de l'eau de pluie découle de la structure même des installations d'agriphotovoltaïsme où les panneaux photovoltaïques sont montés sur des dispositifs de suiveur solaire. Lorsqu'il pleut, l'eau de pluie s'écoule sur les panneaux photovoltaïques inclinés, ce qui a pour effet de la concentrer sur certaines zones des cultures situées à proximité de ces panneaux, en créant ainsi des hétérogénéités dans l'apport d'eau, voire même en provoquant des ravinements des terres agricoles.

Il serait donc souhaitable d'avoir une répartition homogène de l'eau sur les cultures.

Inversement, il serait souhaitable de remédier aux problèmes de sécheresse durant les périodes d'étiage (niveau le plus bas d'un plan d'eau).

On connaît déjà d'après l'art antérieur, une solution qui préconise de piloter l'orientation des panneaux photovoltaïques pour les amener en position verticale en cas de pluie. Ainsi, l'eau tombe de façon uniformément répartie sur les cultures situées à proximité du panneau photovoltaïque. Si cette solution résout le problème de l'absence d'homogénéité des apports d'eau sur les cultures et évite le ravinement des terres, elle ne répond pas au problème de la sécheresse.

On connaît également d'après le document US 2017/202155 une installation photovoltaïque comprenant au moins un panneau solaire muni d'une gouttière. Toutefois, cette installation ne comprend pas de dispositif de suiveur solaire et comme l'installation est fixe, la gouttière n'a pas besoin d'être mobile.

On connaît également d'après le document FR 2 973 985 une installation photovoltaïque, munie d'une conduite d'arrosage, qui remplit une double fonction de refroidissement du panneau photovoltaïque et d'arrosage des plantations se trouvant à la base de ce panneau. Cette installation ne comprend pas de gouttière et donc a fortiori pas de gouttière mobile.

On connaît d'après WO 2018/146288 un panneau solaire mobile qui peut comprendre une gouttière mais pas oscillante sous l'action de son poids.

Enfin, on connaît de DE 10 2013 002825 une installation photovoltaïque avec des panneaux solaires montés sur un support creux et un système de récupération d'eau de pluie, qui permet de diriger celle-ci vers un réservoir, enfoui dans le sol. Cette installation ne comprend pas de gouttière oscillante sous l'action de son poids.

### EXPOSE DE L'INVENTION

Un but de l'invention est de résoudre les problèmes précités et notamment de mieux répartir l'eau de pluie sur les cultures situées sous les panneaux photovoltaïques ou à proximité de ceux-ci et inversement d'éviter les problèmes de sécheresse de ces cultures.

Un autre but de l'invention est de réussir à résoudre ce problème sans diminuer la surface agricole et sans entraver le fonctionnement des panneaux photovoltaïques et des dispositifs de suiveur solaire (trackers) sur lesquels ils sont montés.

A cet effet, l'invention concerne une installation photovoltaïque comprenant un dispositif de suiveur solaire et au moins un panneau photovoltaïque carré ou rectangulaire, monté sur ledit dispositif de suiveur solaire, ce dispositif de suiveur solaire permettant de faire varier l'inclinaison dudit panneau photovoltaïque par rapport à l'horizontale, de sorte que deux bords opposés dudit panneau photovoltaïque, dits bords horizontaux, soient toujours horizontaux ou sensiblement horizontaux quelle que soit l'inclinaison dudit panneau photovoltaïque.

Conformément à l'invention, cette installation comprend au moins une gouttière de récupération d'eau de pluie, en ce que cette gouttière est montée le long de l'un deux bords horizontaux du panneau photovoltaïque à l'aide d'au moins deux dispositifs d'accrochage, auxquels elle est suspendue de sorte qu'elle peut osciller sous l'action de son poids, autour d'un axe de rotation horizontal , de façon à rester horizontale ou sensiblement horizontale quelle que soit l'inclinaison dudit panneau photovoltaïque.

Grâce à ces caractéristiques de l'invention, la gouttière est un système pendulaire et elle reste en permanence en position horizontale. Ainsi, quelle que soit l'inclinaison du ou des panneau(x) photovoltaïque(s), la gouttière permet de récupérer l'eau de pluie et d'éviter que l'écoulement d'eau qui ruisselle sur le panneau photovoltaïque ne se concentre en un point et provoque un ravinement des sols.

Selon d'autres caractéristiques avantageuses et non limitatives de l'invention, prises seules ou en combinaison :
- ladite gouttière de récupération d'eau de pluie comprend un premier rebord longitudinal et un deuxième rebord longitudinal, chaque dispositif d'accrochage comprend un support muni d'un pivot horizontal et d'un dispositif de fixation sur ledit panneau photovoltaïque, un premier câble de suspension, fixé à sa première extrémité au premier rebord longitudinal de la gouttière, un deuxième câble de suspension fixé à sa première extrémité au deuxième rebord longitudinal de la gouttière, la deuxième extrémité du premier câble de suspension et la deuxième extrémité du deuxième câble de suspension étant fixées à un point de raccordement du premier câble et du deuxième câble, et un troisième câble de suspension qui relie ledit point de raccordement au pivot horizontal et les au moins deux dispositifs d'accrochage sont montés sur le panneau photovoltaïque de sorte que leurs pivots respectifs soient coaxiaux et définissent ledit axe de rotation horizontal ;
- ladite gouttière de récupération d'eau de pluie comprend un premier rebord longitudinal et un deuxième rebord longitudinal, chaque dispositif d'accrochage comprend un support muni d'un pivot horizontal et d'un dispositif de fixation sur ledit panneau photovoltaïque, un premier câble de suspension, fixé à sa première extrémité au premier rebord longitudinal de la gouttière, un deuxième câble de suspension fixé à sa première extrémité au deuxième rebord longitudinal de la gouttière, la deuxième extrémité du premier câble de suspension et la deuxième extrémité du deuxième câble de suspension étant fixées audit pivot horizontal et les au moins deux dispositifs d'accrochage sont montés sur le panneau photovoltaïque de sorte que leurs pivots respectifs soient coaxiaux et définissent ledit axe de rotation horizontal ;
- le dispositif de fixation comprend une pince qui permet de serrer le bord horizontal du panneau photovoltaïque ;
- le pivot horizontal est un pivot à amortisseur rotatif ;
- ledit panneau photovoltaïque comprend deux bords opposés dits bords latéraux perpendiculaires aux bords horizontaux, ledit support à une forme en L avec une première branche et une deuxième branche, le pivot horizontal est fixé à l'extrémité libre de la première branche et perpendiculairement à celle-ci et le dispositif de fixation est fixé à l'extrémité libre de la deuxième branche, de sorte que le support est fixé sur le panneau photovoltaïque à l'aide du dispositif de fixation, que la deuxième branche s'étend selon une direction qui est parallèle au bord latéral du panneau photovoltaïque et que le pivot est horizontal;
- la longueur de la deuxième branche est telle que le bord horizontal du panneau photovoltaïque est situé au-dessus du deuxième rebord longitudinal de la gouttière lorsque ledit panneau photovoltaïque est à l'horizontale ;
- l'installation comprend deux dispositifs d'accrochage qui sont fixés respectivement aux deux extrémités de la gouttière ;
- ladite gouttière présente en son fond au moins un orifice d'évacuation muni d'un raccord d'évacuation, ladite installation photovoltaïque comprend au moins un réservoir de stockage de l'eau de pluie et au moins un tuyau souple raccordant ledit raccord d'évacuation de ladite gouttière à ce réservoir de stockage ;
- ladite gouttière est percée d'une pluralité de trous de pulvérisation, éventuellement obturables à l'aide de clapets.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] est une vue en perspective de l'installation photovoltaïque conforme à l'invention, vue de face.
[Fig. 2] est une vue en perspective de l'installation photovoltaïque conforme à l'invention, vue de dos.
[Fig. 3] est une vue de face d'un mode de réalisation d'une partie de l'installation photovoltaïque conforme à l'invention, lorsque le panneau photovoltaïque est à l'horizontale.
[Fig. 4] est une vue similaire à la figure 3 représentant l'écoulement de la pluie sur l'installation.
[Fig. 5] est une similaire à la figure 3 représentant l'écoulement de la pluie sur l'installation, lorsque le panneau photovoltaïque est incliné selon une première direction.
[Fig. 6] est une similaire à la figure 3 représentant l'écoulement de la pluie sur l'installation, lorsque le panneau photovoltaïque est incliné selon une deuxième direction opposée à la première direction.
[Fig. 7] est une vue de face d'une variante de réalisation d'une partie de l'installation photovoltaïque conforme à l'invention, lorsque le panneau photovoltaïque est à l'horizontale.
[Fig. 8] est une vue similaire à la figure 7 représentant l'écoulement de la pluie sur l'installation, lorsque le panneau photovoltaïque est incliné selon une première direction.
[Fig. 9] est une vue similaire à la figure 7 représentant l'écoulement de la pluie sur l'installation, lorsque le panneau photovoltaïque est incliné selon deuxième direction opposée à la première direction.
[Fig. 10] est une vue de l'extrémité de l'installation lorsque celle-ci comprend des réservoirs de stockage de l'eau de pluie, le panneau photovoltaïque étant incliné selon une première direction.
[Fig. 11] est une vue de l'extrémité de l'installation lorsque celle-ci comprend des réservoirs de stockage de l'eau de pluie, le panneau photovoltaïque étant incliné selon une deuxième direction opposée à la première direction.

### DESCRIPTION DETAILLEE DE L'INVENTION

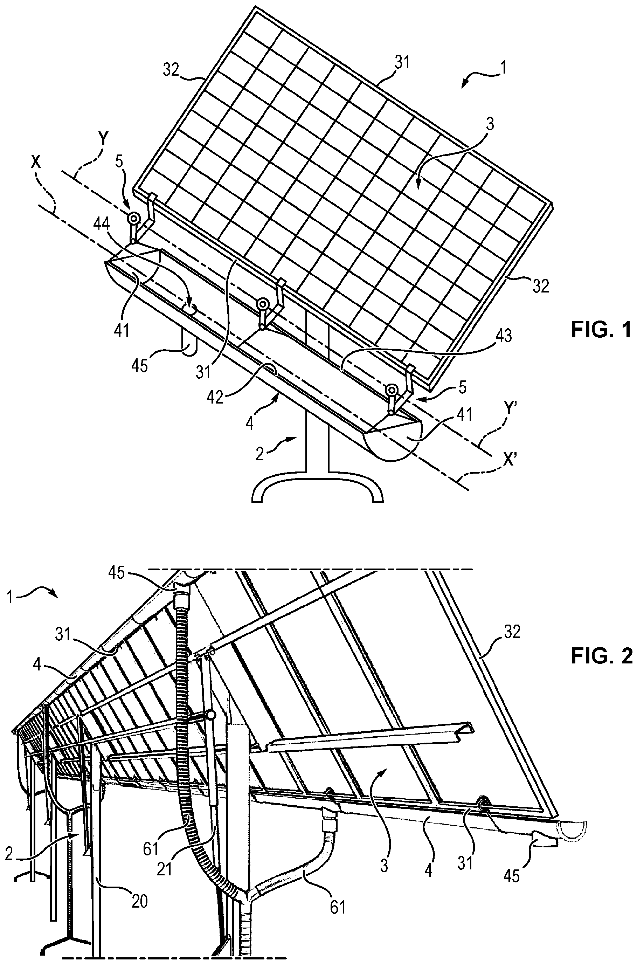

L'installation photovoltaïque conforme à l'invention va maintenant être décrite en liaison avec les figures 1, 2, 10 et 11.

Dans la suite de la description et des revendications, les termes « horizontal(e) », et « vertical(e) », « sont à prendre en considération par rapport à un référentiel terrestre ou à la position normale d'implantation de l'installation 1, telle que représentée sur les figures 1 et 2.

Cette installation photovoltaïque 1 comprend un dispositif de suiveur solaire 2 et au moins un panneau photovoltaïque (ou panneau solaire) 3, monté sur ce dispositif de suiveur solaire.

Le dispositif de suiveur solaire 2 (connu sous la dénomination anglaise de «*tracker* ») est un dispositif qui permet de faire varier l'inclinaison d'un ou de plusieurs panneaux solaires 3, par rapport à l'horizontale, de façon à suivre la course du soleil.

Un tel dispositif de suiveur solaire 2 comprend par exemple un pied support 20 érigé sur le sol et un vérin 21, dont le corps et la tige sont fixés respectivement, l'un au pied support 20 et l'autre à la face arrière du panneau solaire 3.

Un tel dispositif de suiveur solaire 2 est bien connu de l'homme du métier et ne sera pas décrit plus en détail.

Le panneau photovoltaïque 3 est de forme carrée ou rectangulaire et comprend quatre bords.

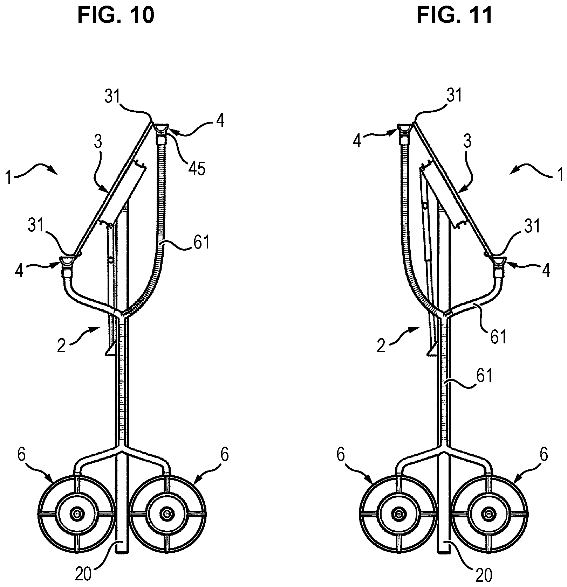

Lorsque le dispositif de suiveur solaire 2 est actionné, il permet de déplacer le panneau photovoltaïque 3 tout au long de la journée, d'une position verticale ou quasiment verticale, dans laquelle le panneau est orienté par exemple vers l'est, comme représenté sur la figure 10 jusqu'à une position verticale ou quasiment verticale, dans laquelle le panneau photovoltaïque 3 est orienté par exemple vers l'ouest, comme représenté sur la figure 11, en occupant toute une série de positions intermédiaires pour suivre la course du soleil.

Le panneau 3 est monté sur le dispositif suiveur 2 de sorte qu'au cours de ce déplacement, deux des bords opposés du panneau photovoltaïque 3 restent horizontaux ou sensiblement horizontaux. En conséquence, par convention, ils sont dénommés dans la suite de la description et des revendications « bords horizontaux » 31. Les deux autres bords opposés du panneau photovoltaïque 3 sont dénommés « bords latéraux » et sont référencés 32. Par « sensiblement horizontal », on entend que ce bord 31 peut éventuellement être écarté au maximum de 15° par rapport à l'horizontale.

L'installation photovoltaïque 1 comprend également au moins une gouttière 4 de récupération d'eau de pluie.

Comme cela apparaît mieux sur la figure 1, chaque gouttière 4 s'étend selon un axe longitudinal médian X-X'. Elle présente de préférence une section transversale semi-circulaire. Elle est obturée à chacune de ses deux extrémités par des cloisons d'extrémité 41. Enfin, chaque gouttière 4 présente deux rebords longitudinaux parallèles, respectivement un premier rebord longitudinal 42 et un deuxième rebord longitudinal 43.

Chaque gouttière 4 est montée le long de l'un desdits bords horizontaux 31 d'un panneau photovoltaïque 3. En d'autres termes, chaque gouttière 4 est montée de sorte que ses rebords longitudinaux 42, 43 soient parallèles ou sensiblement parallèles à l'un des bords horizontaux 31 du panneau 3.

De façon avantageuse, et comme on peut le voir sur les figures 2, 10 et 11, l'installation comprend deux gouttières 4, montées respectivement le long de chacun des bords horizontaux 31 du panneau photovoltaïque 3.

En outre, chaque gouttière 4 est montée le long d'un bord horizontal 31 du panneau 3, à l'aide d'au moins deux dispositifs d'accrochage 5. De préférence, ces deux dispositifs d'accrochage 5 sont disposés aux deux extrémités d'une gouttière 4 ou à proximité de ces extrémités. Pour des gouttières 4 de grande longueur, il est également envisageable d'utiliser plus de deux dispositifs d'accrochage 5, répartis sur la longueur de la gouttière pour soutenir celle-ci de manière plus homogène et éviter sa déformation.

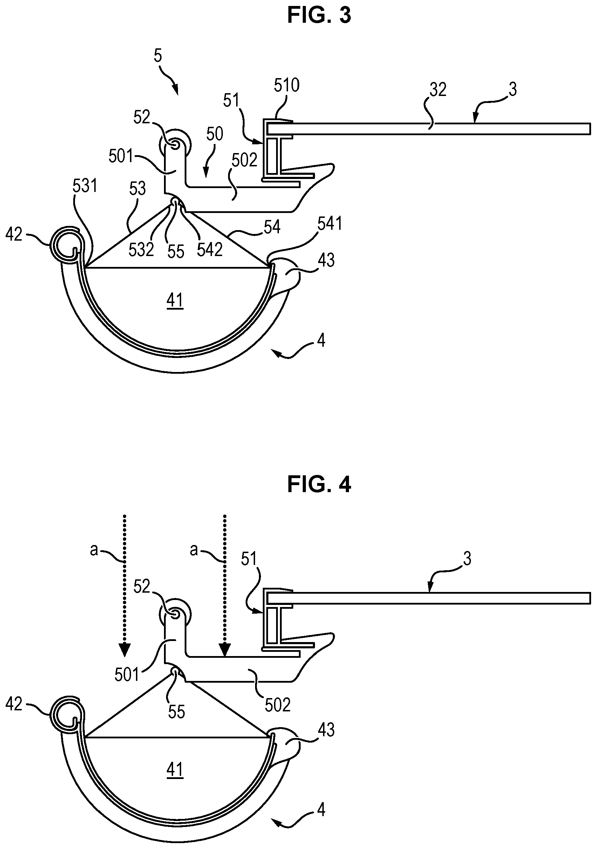

Un premier mode de réalisation du dispositif d'accrochage 5 va maintenant être décrit plus en détail, en liaison avec la figure 3.

Ce dispositif d'accrochage 5 est configuré pour permettre d'y suspendre la gouttière 4. Cette gouttière 4 peut ainsi osciller sous l'action de son poids, autour d'un axe de rotation horizontal Y-Y', de sorte qu'elle puisse se déplacer par rapport au panneau photovoltaïque 3 pour rester dans une position d'équilibre stable dans laquelle elle est à l'horizontale ou sensiblement à l'horizontale (c'est-à-dire à 15° près), quelle que soit l'inclinaison dudit panneau photovoltaïque 3. En d'autres termes, la gouttière 4 est fixée au panneau photovoltaïque 3 comme un pendule.

L'axe de rotation Y-Y' est parallèle à l'axe longitudinal X-X' de la gouttière 4.

Le dispositif d'accrochage 5 comprend un support 50, qui est muni d'un dispositif de fixation 51 sur le panneau photovoltaïque 3 et également d'un pivot 52. Le dispositif d'accrochage 5 comprend également deux câbles de suspension, à savoir un premier câble 53 et un deuxième câble 54.

Le premier câble 53 est fixé à sa première extrémité 531 au premier rebord longitudinal 42 et à sa deuxième extrémité 532, à un point 55 de raccordement des deux câbles, tandis que le deuxième câble 54 est fixé à sa première extrémité 541 au deuxième rebord longitudinal 43 et à sa deuxième extrémité 542, au même point 55 de raccordement des deux câbles.

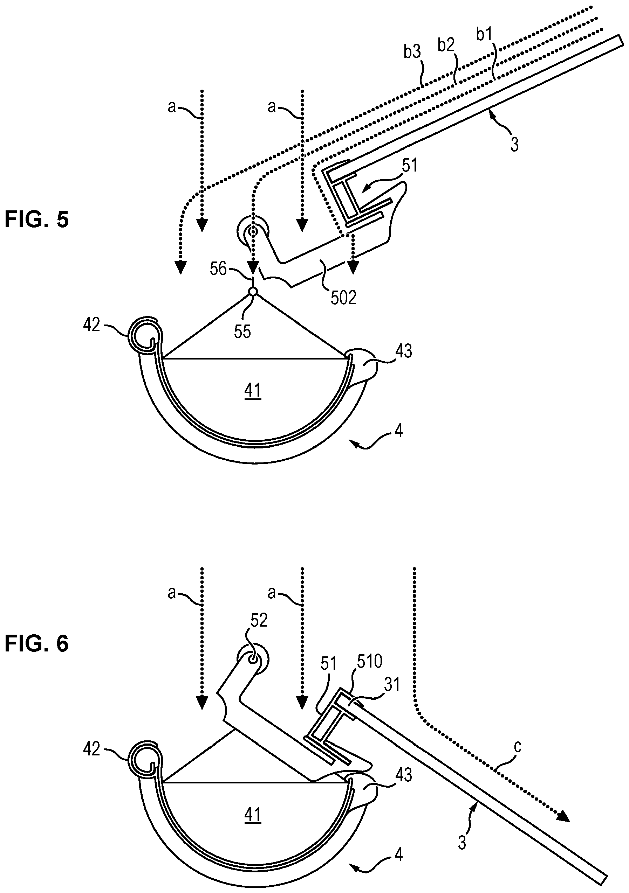

Enfin, le dispositif d'accrochage 5 comprend un troisième câble de suspension 56, qui relie le point de raccordement 55 au pivot horizontal 52. Ce troisième câble 56 apparaît mieux sur la figure 5.

Ce mode de réalisation est préférable car il permet d'éviter que le deuxième câble de suspension 54 (c'est-à-dire celui qui est le plus proche du panneau photovoltaïque) ne touche éventuellement le support 50, voire même le panneau photovoltaïque 3, lors des mouvements de pivotement de la gouttière 4.

Toutefois, selon une variante de réalisation non représentée sur les figures, il serait également possible de fixer les deuxièmes extrémités 532, 542 des deux câbles 53, respectivement 54, directement au pivot horizontal 52. Dans ce cas, il faut veiller à adapter la longueur des câbles 53, 54, de façon à ce qu'ils ne viennent pas au contact du support 50 ou du panneau 3, quelle que soit l'inclinaison de ce dernier.

Les au moins deux dispositifs d'accrochage sont fixés au panneau solaire de sorte que leurs pivots 52 respectifs soient alignés et coaxiaux et définissent ensemble l'axe de rotation horizontal (Y-Y') autour duquel la gouttière 4 peut pivoter.

Le dispositif de fixation 51 est fixé sur le support 50, par exemple par emboîtement, par vissage ou par soudure ou encore est monobloc avec ce support 50 et il comprend une extrémité de fixation, telle qu'une pince 510, qui permet d'enserrer le bord horizontal 31 du panneau photovoltaïque 3. La pince 510 pourrait également être remplacée par tout autre dispositif permettant de rendre solidaire ce dispositif de fixation 51 et le panneau 3, par exemple une fixation avec une vis et un boulon ou une fixation de la pince 510 à l'aide d'une goupille (non représentée sur les figures).

De préférence, le support 50 présente la forme d'une plaque en L, à deux branches, à savoir une première branche 501 et une deuxième branche 502.

De préférence, le dispositif de fixation 51 sur le panneau 3 est fixé à l'extrémité libre de la deuxième branche 502 de sorte que lorsque le dispositif de fixation 51 est monté sur le panneau 3, la deuxième branche 502 s'étend selon une direction qui est parallèle au bord latéral 32 du panneau. Par ailleurs, de préférence, le pivot horizontal 52 est fixé à l'extrémité libre de la première branche 501 perpendiculairement à celle-ci. Ainsi, lorsque le support 50 est fixé sur le panneau photovoltaïque 3, le pivot 52 est horizontal.

Le troisième câble 56 est monté sur le pivot horizontal 52, de sorte que la gouttière 4 puisse pivoter librement ou quasiment librement autour de celui-ci et donc autour de l'axe de rotation X-X'.

Toutefois, selon une variante de réalisation, le pivot 52 peut être un pivot à amortisseur rotatif, conçu pour incorporer un mécanisme de frein. Un tel pivot à amortisseur rotatif permet d'éviter que la gouttière 4 ne soit soumise à de trop grandes amplitudes de balancement, lorsque l'installation photovoltaïque 1 subit des vents violents. On évite ainsi d'endommager la gouttière 4 ou son dispositif d'accrochage 5 et on garantit une bonne récupération de l'eau de pluie. Plusieurs types de pivot à amortisseur rotatif peuvent être utilisés, par exemple des pivots à amortisseur mécanique, magnétique ou à fluide visqueux, la dernière solution étant préférée.

De façon avantageuse, la longueur de la deuxième branche 502 est dimensionnée de sorte que le bord horizontal 31 du panneau photovoltaïque 3 soit au-dessus du deuxième rebord longitudinal 43 de la gouttière 4, lorsque le panneau photovoltaïque 3 est à l'horizontal, de façon à garantir une récupération maximale d'eau de pluie quelle que soit cette orientation.

En effet, comme on peut le voir sur la figure 4, lorsque le panneau photovoltaïque 3 est disposé à l'horizontale, l'eau de pluie tombe directement dans la gouttière 4 (voir les flèches a) et le panneau photovoltaïque 3 n'obture pas l'ouverture de la gouttière 4.

Lorsque le panneau photovoltaïque 3 est orienté selon une première inclinaison représentée sur la figure 5, dans laquelle la gouttière 4 se trouve à une altitude inférieure par rapport au panneau 3, l'eau de pluie continue à tomber directement dans la gouttière 4 (voir les flèches a) et l'eau qui ruisselle sur le panneau 3 tombe également dans la gouttière 4, les flèches b1, b2 et b3 représentant respectivement des flux d'eau dont la vitesse est de plus en plus élevée (la flèche b1 représentant une petite pluie fine et inversement la flèche b3 une grosse averse).

Enfin, comme on peut le voir sur la figure 6, lorsque le panneau photovoltaïque 3 est orienté selon une deuxième inclinaison, dans laquelle la gouttière 4 se trouve à une altitude supérieure au panneau 3, alors la pluie continue à tomber directement dans la gouttière 4 (voir les flèches a) et l'eau qui ruisselle sur le panneau 3 (flèche c) est évacuée en direction de l'autre bord horizontal 31 du panneau 3 et de l'autre gouttière 4, si celle-ci est présente sur l'autre bord horizontal 31.

Par ailleurs, on notera que la distance entre le point de raccordement 55 et le pivot 52 peut être ajusté différemment. En d'autres termes, la longueur du troisième câble 56 ou la longueur de la première branche 501 peuvent être ajustées, de façon à rapprocher la gouttière 4 plus ou moins du panneau 3.

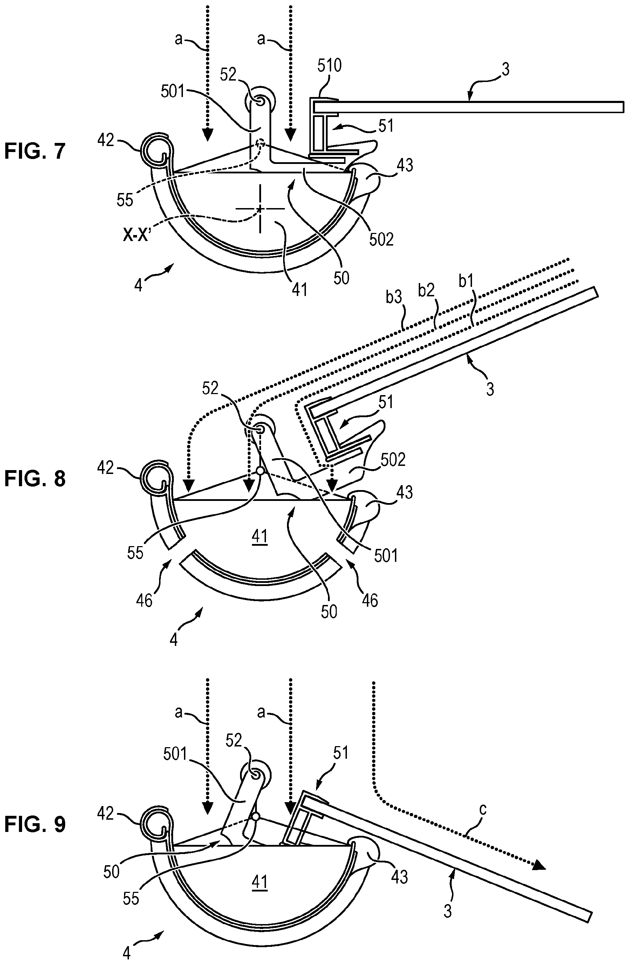

Ainsi, dans le premier mode de réalisation de l'invention représenté sur les figures 3 à 6, la longueur de la première branche 501 est plus faible que la longueur de la première branche 501 dans le deuxième mode de réalisation de l'invention, représenté sur les figures 7 à 9, la longueur du troisième câble 56 étant identique dans les deux cas.

Dans le mode de réalisation des figures 3 à 6, la récupération d'eau de pluie est moins optimale puisque la distance entre le bord horizontal 31 du panneau 3 et le fond de la gouttière 4 est plus grande. Toutefois, la rotation du panneau 3 ne gêne pas le mouvement de la gouttière 4.

Inversement, dans le mode de réalisation des figures 7 à 9, la récupération d'eau de pluie est optimale puisque la distance entre le bord horizontal 31 du panneau 3 et le fond de la gouttière 4 est plus faible. Toutefois dans ce cas, le support 50 risque davantage de buter dans la gouttière 4, notamment lorsque le panneau photovoltaïque 3 est incliné de sorte que la gouttière 4 soit à une altitude supérieure à celle du panneau 3, comme représenté sur la figure 9. Dans ce dernier cas, on peut voir en effet que la course de pivotement du support 50 est telle que la deuxième branche 502 se déplace à l'intérieur du volume de la gouttière 4.

Par ailleurs, les trajectoires de l'eau de pluie qui tombe directement ou qui ruisselle sur le panneau photovoltaïque 3 sont respectivement les mêmes dans les figures 7, 8 et 9 que dans les figures 4, 5 et 6 précédemment décrites, (références des flèches identiques).

Par ailleurs, comme exposé précédemment et notamment en fonction d'irrégularités du terrain sur lequel est implanté l'installation photovoltaïque 1, il est possible que le bord 31 du panneau photovoltaïque 3 et que la gouttière 4 ne soient pas rigoureusement horizontaux. Toutefois, il est possible d'ajuster la longueur du troisième câble de suspension 56 ou celle de la branche 502 d'au moins l'un des dispositifs d'accrochage 5 pour ramener la gouttière 4 le plus proche possible de l'horizontale.

En outre, de façon avantageuse et afin de gérer au mieux la ressource en eau de pluie récupérée dans les gouttières, l'installation photovoltaïque 1 conforme à l'invention comprend également au moins un réservoir de stockage 6.

Ce réservoir de stockage 6 est avantageusement disposé à proximité du dispositif suiveur 2, par exemple sous les panneaux photovoltaïques 3. De plus, chaque gouttière 4 est alors munie en son fond d'au moins un orifice d'évacuation 44, qui se prolonge vers l'extérieur de la gouttière par un raccord d'évacuation 45. Un tuyau souple 61 raccorde le réservoir 6 à la gouttière 4, plus précisément audit raccord 45.

L'eau récupérée peut ensuite être utilisée dans un dispositif d'arrosage des cultures.

Enfin, selon une variante de réalisation représentée uniquement sur la figure 8, il est possible de prévoir une pluralité de petits trous de pulvérisation 46, percés au travers de la paroi de la gouttière 4. Ceci permet de réguler le flux de l'eau, en cas de fortes précipitations.

Des clapets, non représentés sur la figure peuvent également être placés devant ces trous de pulvérisation 46 et être déplacés sur commande pour ouvrir ou fermer ces trous. De tel trous de pulvérisation 46 permettent de distribuer l'eau contenue dans la gouttière 4 comme avec une pomme de douche, afin de répartir l'eau au mieux sur le sol, y compris sous les panneaux photovoltaïques 3, sous lesquels une moins grande quantité d'eau est généralement répartie.

## Revendications

1. Installation photovoltaïque (1) comprenant un dispositif de suiveur solaire (2) et au moins un panneau photovoltaïque (3) carré ou rectangulaire, monté sur ledit dispositif de suiveur solaire (2), ce dispositif de suiveur solaire (2) permettant de faire varier l'inclinaison dudit panneau photovoltaïque (3) par rapport à l'horizontale, de sorte que deux bords opposés dudit panneau photovoltaïque, dits bords horizontaux (31), soient toujours horizontaux ou sensiblement horizontaux quelle que soit l'inclinaison dudit panneau photovoltaïque (3), **caractérisée en ce qu'**elle comprend au moins une gouttière de récupération d'eau de pluie (4), **en ce que** cette gouttière (4) est montée le long de l'un deux bords horizontaux (31) du panneau photovoltaïque (3) à l'aide d'au moins deux dispositifs d'accrochage (5), auxquels elle est suspendue de sorte qu'elle peut osciller sous l'action de son poids, autour d'un axe de rotation horizontal (Y-Y'), de façon à rester horizontale ou sensiblement horizontale quelle que soit l'inclinaison dudit panneau photovoltaïque (3).

2. Installation photovoltaïque (1) selon la revendication 1, **caractérisée en ce que** ladite gouttière de récupération d'eau de pluie (4) comprend un premier rebord longitudinal (42) et un deuxième rebord longitudinal (43), **en ce que** chaque dispositif d'accrochage (5) comprend :
- un support (50) muni d'un pivot horizontal (52) et d'un dispositif de fixation (51) sur ledit panneau photovoltaïque (3),
- un premier câble de suspension (53), fixé à sa première extrémité (531) au premier rebord longitudinal (42) de la gouttière (4),
- un deuxième câble de suspension (54) fixé à sa première extrémité (541) au deuxième rebord longitudinal (43) de la gouttière (4), la deuxième extrémité (532) du premier câble de suspension (53) et la deuxième extrémité (542) du deuxième câble de suspension (54) étant fixées à un point de raccordement (55) du premier câble et du deuxième câble,
- et un troisième câble de suspension (56) qui relie ledit point de raccordement (55) au pivot horizontal (52),
et **en ce que** les au moins deux dispositifs d'accrochage (5) sont montés sur le panneau photovoltaïque (3) de sorte que leurs pivots respectifs (52) soient coaxiaux et définissent ledit axe de rotation horizontal (Y-Y').

3. Installation photovoltaïque (1) selon la revendication 1, **caractérisée en ce que** ladite gouttière de récupération d'eau de pluie (4) comprend un premier rebord longitudinal (42) et un deuxième rebord longitudinal (43), **en ce que** chaque dispositif d'accrochage (5) comprend :
- un support (50) muni d'un pivot horizontal (52) et d'un dispositif de fixation (51) sur ledit panneau photovoltaïque (3),
- un premier câble de suspension (53), fixé à sa première extrémité (531) au premier rebord longitudinal (42) de la gouttière (4),
- un deuxième câble de suspension (54) fixé à sa première extrémité (541) au deuxième rebord longitudinal (43) de la gouttière (4), la deuxième extrémité (532) du premier câble de suspension (53) et la deuxième extrémité (542) du deuxième câble de suspension (54) étant fixées audit pivot horizontal (52),
et **en ce que** les au moins deux dispositifs d'accrochage (5) sont montés sur le panneau photovoltaïque (3) de sorte que leurs pivots respectifs (52) soient coaxiaux et définissent ledit axe de rotation horizontal (Y-Y').

4. Installation photovoltaïque (1) selon la revendication 2 ou 3, **caractérisée en ce que** le dispositif de fixation (51) comprend une pince (510) qui permet de serrer le bord horizontal (31) du panneau photovoltaïque (3).

5. Installation photovoltaïque (1) selon la revendication 2 ou 3, **caractérisée en ce que** le pivot horizontal (52) est un pivot à amortisseur rotatif.

6. Installation photovoltaïque (1) selon l'une quelconque des revendications précédentes, **caractérisée en ce que** ledit panneau photovoltaïque (3) comprend deux bords opposés dits bords latéraux (32) perpendiculaires aux bords horizontaux (31),
- **en ce que** ledit support (50) à une forme en L avec une première branche (501) et une deuxième branche (502),
- **en ce que** le pivot horizontal (52) est fixé à l'extrémité libre de la première branche (501) et perpendiculairement à celle-ci,
- et **en ce que** le dispositif de fixation (51) est fixé à l'extrémité libre de la deuxième branche (502), de sorte que le support (50) est fixé sur le panneau photovoltaïque (3) à l'aide du dispositif de fixation (51), que la deuxième branche (502) s'étend selon une direction qui est parallèle au bord latéral (32) du panneau photovoltaïque (3) et que le pivot (52) est horizontal.

7. Installation photovoltaïque (1) selon la revendication 6, **caractérisé en ce que** la longueur de la deuxième branche (502) est telle que le bord horizontal (31) du panneau photovoltaïque (3) est situé au-dessus du deuxième rebord longitudinal (43) de la gouttière (4) lorsque ledit panneau photovoltaïque (3) est à l'horizontale.

8. Installation photovoltaïque (1) selon l'une quelconque des revendications précédentes, **caractérisée en ce qu'**elle comprend deux dispositifs d'accrochage (5) qui sont fixés respectivement aux deux extrémités de la gouttière (4).

9. Installation photovoltaïque (1) selon l'une quelconque des revendications précédentes, **caractérisée en ce que** ladite gouttière (4) présente en son fond au moins un orifice d'évacuation (44) muni d'un raccord d'évacuation (45), **en ce que** ladite installation photovoltaïque (1) comprend au moins un réservoir (6) de stockage de l'eau de pluie et au moins un tuyau souple (61) raccordant ledit raccord d'évacuation (45) de ladite gouttière à ce réservoir de stockage (6).

10. Installation photovoltaïque (1) selon l'une quelconque des revendications précédentes, **caractérisée en ce que** ladite gouttière (4) est percée d'une pluralité de trous de pulvérisation (46), éventuellement obturables à l'aide de clapets.

## Patentansprüche

1. Photovoltaikanlage (1), umfassend eine Solarnachführungsvorrichtung (2) und mindestens ein quadratisches oder rechteckiges Photovoltaik-Panel (3), das auf der Solarnachführungsvorrichtung (2) angebracht ist, wobei diese Solarnachführungsvorrichtung (2) gestattet, die Neigung des Photovoltaik-Panels (3) im Verhältnis zur Horizontalen zu verändern, so dass zwei gegenüberliegende Ränder des Photovoltaik-Panels, bezeichnet als horizontale Ränder (31), immer horizontal oder etwa horizontal unabhängig von der Neigung des Photovoltaik-Panels (3) sind, **dadurch gekennzeichnet, dass** sie mindestens eine Regenwasserauffangrinne (4) umfasst, dass diese Rinne (4) entlang von einem der zwei horizontalen Ränder (31) des Photovoltaik-Panels (3) mit Hilfe von mindestens zwei Verankerungsvorrichtungen (5) angebracht ist, an denen sie derart aufgehängt ist, dass sie unter der Wirkung ihres Gewichts um eine horizontale Drehachse (Y-Y') derart hin und her schwingen kann, so dass sie unabhängig von der Neigung des Photovoltaik-Panels (3) horizontal oder etwa horizontal bleibt.

2. Photovoltaikanlage (1) nach Anspruch 1, **dadurch gekennzeichnet, dass** die Regenwasserauffangrinne (4) eine erste Längskante (42) und eine zweite Längskante (43) umfasst, dass jede Verankerungsvorrichtung (5) umfasst:
- einen Halter (50), der mit einem horizontalen Zapfen (52) und einer Befestigungsvorrichtung (51) an dem Photovoltaik-Panel (3) versehen ist,
- ein erstes Aufhängungskabel (53), das an seinem ersten Ende (531) an der ersten Längskante (42) der Rinne (4) befestigt ist,
- ein zweites Aufhängungskabel (54), das an seinem ersten Ende (541) an der zweiten Längskante (43) der Rinne (4) befestigt ist, wobei das zweite Ende (532) des ersten Aufhängungskabels (53) und das zweite Ende (542) des zweiten Aufhängungskabels (54) an einem Anschlusspunkt (55) des ersten Kabels und des zweiten Kabels befestigt sind,
- und ein drittes Aufhängungskabel (56), das den Anschlusspunkt (55) mit dem horizontalen Zapfen (52) verbindet,
und dass die mindestens zwei Verankerungsvorrichtungen (5) derart am Photovoltaik-Panel (3) angebracht sind, dass ihre jeweiligen Zapfen (52) koaxial sind und die horizontale Drehachse (Y-Y') definieren.

3. Photovoltaikanlage (1) nach Anspruch 1, **dadurch gekennzeichnet, dass** die Regenwasserauffangrinne (4) eine erste Längskante (42) und eine zweite Längskante (43) umfasst, dass jede Verankerungsvorrichtung (5) umfasst:
- einen Halter (50), der mit einem horizontalen Zapfen (52) und einer Befestigungsvorrichtung (51) an dem Photovoltaik-Panel (3) versehen ist,
- ein erstes Aufhängungskabel (53), das an seinem ersten Ende (531) an der ersten Längskante (42) der Rinne (4) befestigt ist,
- ein zweites Aufhängungskabel (54), das an seinem ersten Ende (541) an der zweiten Längskante (43) der Rinne (4) befestigt ist, wobei das zweite Ende (532) des ersten Aufhängungskabels (53) und das zweite Ende (542) des zweiten Aufhängungskabels (54) am horizontalen Zapfen (52) befestigt sind,
und dass die mindestens zwei Verankerungsvorrichtungen (5) derart am Photovoltaik-Panel (3) angebracht sind, dass ihre jeweiligen Zapfen (52) koaxial sind und die horizontale Drehachse (Y-Y') definieren.

4. Photovoltaikanlage (1) nach Anspruch 2 oder 3, **dadurch gekennzeichnet, dass** die Befestigungsvorrichtung (51) eine Klammer (510) umfasst, die erlaubt, den horizontalen Rand (31) des Photovoltaik-Panels (3) zu umklammern.

5. Photovoltaikanlage (1) nach Anspruch 2 oder 3, **dadurch gekennzeichnet, dass** der horizontale Zapfen (52) ein Zapfen mit Rotationsdämpfer ist.

6. Photovoltaikanlage (1) nach einem der vorangehenden Ansprüche, **dadurch gekennzeichnet, dass** das Photovoltaik-Panel (3) zwei gegenüberliegende Ränder, bezeichnet als Seitenränder (32), umfasst, die zu den horizontalen Rändern (31) senkrecht sind,
- dass der Halter (50) eine L-Form mit einem ersten Schenkel (501) und einem zweiten Schenkel (502) hat,
- dass der horizontale Zapfen (52) am freien Ende des ersten Schenkels (501) befestigt und senkrecht zu diesem ist,
- und dass die Befestigungsvorrichtung (51) am freien Ende des zweiten Schenkels (502) befestigt ist, so dass der Halter (50) am Photovoltaik-Panel (3) mit Hilfe der Befestigungsvorrichtung (51) befestigt ist, dass sich der zweite Schenkel (502) in einer Richtung erstreckt, die zum Seitenrand (32) des Photovoltaik-Panels (3) parallel ist und dass der Zapfen (52) horizontal ist.

7. Photovoltaikanlage (1) nach Anspruch 6, **dadurch gekennzeichnet, dass** die Länge des zweiten Schenkels (502) derart ist, dass sich der horizontale Rand (31) des Photovoltaik-Panels (3) oberhalb der zweiten Längskante (43) der Rinne (4) befindet, wenn das Photovoltaik-Panel (3) in der Horizontalen ist.

8. Photovoltaikanlage (1) nach einem der vorangehenden Ansprüche, **dadurch gekennzeichnet, dass** sie zwei Verankerungsvorrichtungen (5) umfasst, die jeweils an zwei Enden der Rinne (4) befestigt sind.

9. Photovoltaikanlage (1) nach einem der vorangehenden Ansprüche, **dadurch gekennzeichnet, dass** die Rinne (4) in ihrem Boden mindestens eine Ableitungsöffnung (44) aufweist, die mit einem Ableitungsanschluss (45) versehen ist, dass die Photovoltaikanlage (1) mindestens einen Regenwasserauffangbehälter (6) und mindestens einen Schlauch (61) umfasst, der den Ableitungsanschluss (45) der Rinne mit diesem Auffangbehälter (6) verbindet.

10. Photovoltaikanlage (1) nach einem der vorangehenden Ansprüche, **dadurch gekennzeichnet, dass** die Rinne (4) von einer Vielzahl von Sprühlöchern (46) durchbohrt ist, die gegebenenfalls mit Hilfe von Klappen verschließbar sind.

## Claims

1. A photovoltaic facility (1) comprising a solar tracker (2) and at least one square or rectangular photovoltaic panel (3) mounted on said solar tracker (2), this solar tracker (2) enabling the inclination of said photovoltaic panel (3) to be varied with respect to the horizontal, so that two opposite edges of said photovoltaic panel, referred to as horizontal edges (31), are always horizontal whatever the inclination of said photovoltaic panel (3), **characterised in that it** comprises at least one gutter (4) for recovering rainwater, **in that** this gutter (4) is mounted along one of the two horizontal edges (31) of the photovoltaic panel (3) using at least two anchoring devices (5), to which it is suspended, so that it can oscillate under the action of its own weight, about a horizontal axis of rotation (Y-Y'), so as to remain horizontal, or substantially horizontal, whatever the inclination of said photovoltaic panel (3).

2. The photovoltaic facility (1) according to claim 1, **characterised in that** said rainwater recovery gutter (4) comprises a first longitudinal rim (42) and a second longitudinal rim (43), **in that** each anchoring device (5) comprises:
- a support (50) provided with a horizontal pivot (52) and a fastening device (51) on said photovoltaic panel (3),
- a first suspension cable (53), fastened at its first end (531) to the first longitudinal rim (42) of the gutter (4),
- a second suspension cable (54) fastened at its first end (541) to the second longitudinal rim (43) of the gutter (4), the second end (532) of the first suspension cable (53) and the second end (542) of the second suspension cable (54) being fastened to a connection point (55) of the first cable and of the second cable,
- and a third suspension cable (56) which connects said connection point (55) to the horizontal pivot (52),
and **in that** the at least two anchoring devices (5) are mounted on the photovoltaic panel (3) so that their respective pivots (52) are coaxial and define said horizontal axis of rotation (Y-Y').

3. The photovoltaic facility (1) according to claim 1, **characterised in that** said rainwater recovery gutter (4) comprises a first longitudinal rim (42) and a second longitudinal rim (43), **in that** each anchoring device (5) comprises:
- a support (50) provided with a horizontal pivot (52) and a fastening device (51) on said photovoltaic panel (3),
- a first suspension cable (53), fastened at its first end (531) to the first longitudinal rim (42) of the gutter (4),
- a second suspension cable (54) fastened at its first end (541) to the second longitudinal rim (43) of the gutter (4), the second end (532) of the first suspension cable (53) and the second end (542) of the second suspension cable (54) being fastened to said horizontal pivot (52), and **in that** the at least two anchoring devices (5) are mounted on the photovoltaic panel (3) so that their respective pivots (52) are coaxial and define said horizontal axis of rotation (Y-Y').

4. The photovoltaic facility (1) according to claim 2 or 3, **characterised in that** the fastening device (51) comprises a clamp (510) which enables the horizontal edge (31) of the photovoltaic panel (3) to be clamped.

5. The photovoltaic facility (1) according to claim 2 or 3, **characterised in that** the horizontal pivot (52) is a rotary damper pivot.

6. The photovoltaic facility (1) according to any one of the preceding claims, **characterised in that** said photovoltaic panel (3) comprises two opposite edges, referred to as lateral edges (32), perpendicular to the horizontal edges (31),
- **in that** said support (50) has an L-shape with a first arm (501) and a second arm (502),
- **in that** the horizontal pivot (52) is fastened to the free end of the first arm (501) and perpendicularly thereto,
- and **in that** the fastening device (51) is fastened to the free end of the second arm (502), so that the support (50) is fastened on the photovoltaic panel (3) using the fastening device (51), so that the second arm (502) extends in a direction which is parallel to the lateral edge (32) of the photovoltaic panel (3) and so that the pivot (52) is horizontal.

7. The photovoltaic facility (1) according to claim 6, **characterised in that** the length of the second arm (502) is such that the horizontal edge (31) of the photovoltaic panel (3) is located above the second longitudinal rim (43) of the gutter (4) when said photovoltaic panel (3) is horizontal.

8. The photovoltaic facility (1) according to any one of the preceding claims, **characterised in that** it comprises two anchoring devices (5) which are fastened respectively to the two ends of the gutter (4).

9. The photovoltaic facility (1) according to any one of the preceding claims, **characterised in that** said gutter (4) has, in its bottom, at least one drain orifice (44) provided with a drain connector (45), **in that** said photovoltaic facility (1) comprises at least one rainwater storage tank (6) and at least one flexible pipe (61) connecting said drain connector (45) of said gutter to this storage tank (6).

10. The photovoltaic facility (1) according to any one of the preceding claims, **characterised in that** said gutter (4) is pierced by a plurality of spray holes (46) that can optionally be closed using valves.
